# EUROPEAN PATENT APPLICATION

(11) **EP 4 596 503 A1**
(43) Date of publication of application: **06.08.2025**
(21) Application number: 25151769.4
(22) Date of filing: 14.01.2025
(51) Int. Cl.: C02F 1/00, C02F 1/74, D06F 39/10, C02F 1/44, C02F 1/42, C02F 1/28, C02F 1/02

(54) **WATER PURIFICATION DEVICE CAPABLE OF SUPPRESSING SCALE ADHESION**

(30) Priority: 31.01.2024 KR 20240015132
(71) Applicant: LG Electronics Inc., Yeongdeungpo-gu Seoul 07336 (KR)
(72) Inventor: PARK, Jaewan, 06772 Seoul (KR); TAKATA, Makoto, 06772 Seoul (KR); SATO, Yohei, 06772 Seoul (KR)
(74) Representative: Vossius & Partner Patentanwälte Rechtsanwälte mbB

(57) **Abstract**

A water purification device capable of suppressing scale adhesion includes a water inlet port 1010 through which raw water flows in, a filtration filter 1020 that purifies the raw water to generate purified water, and a pipe 1030 through which the raw water and the purified water flow; a microbubble generating device 1110 that generates microbubbles, a water supply port 1120 through which the purified water is output, a branch part 1130 that branches off the pipe, and a join part 1140 where the pipe joins, the pipe connecting the water supply port and the join part; a bypass pipe 1210 that has one end connected to the branch part and another end connected to the join part to bypass the filtration filter; and a control device that controls a supply timing of the microbubbles and a flow path of the branch part.

## Description

### BACKGROUND

### Field

The present disclosure relates to a water purification device capable of suppressing scale adhesion. More specifically, the present disclosure relates to a water purification device capable of suppressing scale adhesion or a washing apparatus having the same.

### Description of the Related Art

Recently, with the rapid development of industry, the demand for industrial water or residential water has increased rapidly, and thus there is a need to efficiently purify and use raw water such as industrial water or residential water.

In particular, water purification devices have a problem in that scale, mainly composed of calcium and silica, adheres and deposits on the inner surfaces of pipes due to mineral components contained in raw water, blocking the pipes and causing malfunctions of the water purification devices.

In addition, in the washing tub area of a washing apparatus, the inner surface of an outer tub and the outer surface of an inner tub have a weak water flow, so there is little physical external force, and a narrow gap makes maintenance difficult. As a result, scale is likely to adhere and accumulate. The scale adhered in the washing tub area of the washing apparatus causes malfunction of the washing apparatus.

In addition, while the water purification device or washing apparatus is stopped, nanobubble water containing microbubbles remain in a filtration filter, causing bacteria to be proliferated, thereby reducing sanitation.

### SUMMARY

An aspect of the present disclosure is to provide a water purification device capable of suppressing scale adhesion or a washing apparatus having the same.

Another aspect of the present disclosure is to provide a method for suppressing scale adhesion to pipes without using a chemical solution and a water purification device or washing apparatus having such a function.

To achieve those aspects and other advantages of the present disclosure, there is provided a water purification device capable of suppressing scale adhesion that includes a water inlet port through which raw water flows in, a filtration filter that purifies the raw water to generate purified water, and a pipe through which the raw water and the purified water flow; a microbubble generating device that generates microbubbles, a water supply port through which the purified water is output, a branch part that branches off the pipe, and a join part where the pipe joins, the pipe connecting the water supply port and the join part; a bypass pipe that has one end connected to the branch part and another end connected to the join part to bypass the filtration filter, and a control device that controls a supply timing of the microbubbles and a flow path of the branch part.

According to an embodiment, the pipe may be configured to connect the water supply port and the joint part. The control device may perform a first mode as a purified water supply mode when it is determined that a purified water supply process of supplying the purified water through the water supply port is performed. The control device may determine whether a mode is a second mode as a maintenance mode for suppressing scale adhesion in the water purification device when it is determined that the purified water supply process is not performed. The control device may control the flow path of the branch part such that raw water containing microbubbles joins the join part through the bypass pipe when it is determined that the mode is the second mode.

According to an embodiment, the control device may control the supply timing of the microbubbles to the microbubble generating device and the flow path of the branch part when it is determined that the mode is the second mode. The control device may perform the first mode by redetermining the purified water supply process or control the microbubble generating device and the flow path of the branch part at a time point that the second mode is started, when it is determined that the mode is the second mode.

According to an embodiment, in the first mode, the control device may determine whether the microbubbles are being generated through the microbubble generating device, control the microbubble generating device to stop generating the microbubbles when it is determined that the microbubbles are being generated, and switch the flow path of the branch part to a first path of the filtration filter after the generation of the microbubbles is stopped.

According to an embodiment, in the first mode, the control device, may determine whether the first mode has ended after the flow path of the branch part is switched to the first path, repeatedly perform the process of determining whether the microbubbles are being generated by the microbubble generating device when it is determined that the first mode has not ended, and perform the second mode as the maintenance mode when it is determined that the first mode has ended.

According to an embodiment, in the second mode, the control device may switch the flow path of the branch part to a second path of the bypass pipe, determine whether the microbubbles are being generated through the microbubble generating device, and control the microbubble generating device to start the generation of the microbubbles when it is determined that the microbubbles are not being generated.

According to an embodiment, in the second mode, the control device may control the microbubble generating device to generate the microbubbles while maintaining the flow path of the bypass pipe as the flow path of the branch part, perform the second mode as the maintenance mode until a certain period of time elapses or a certain amount of water flows after the microbubbles are generated when it is determined that the microbubbles are being generated, end the second mode as the maintenance mode when the certain period of time has elapsed or the certain amount of water flows after the generation of the microbubbles, and start the first mode as the purified water supply mode after the second mode ends.

According to an embodiment, the water purification device may further include a gas dissolving device that is disposed between the water inlet port and the microbubble generating device and allows gas to be dissolved in the raw water supplied through the water inlet port. The control device may control in the first mode the gas dissolving device and the microbubble generating device such that the raw water does not contain the gas and the microbubbles. The control device may control in the first mode the first path of the filtration filter to be the flow path of the branch part, such that the raw water passes through the filtration filter to generate purified water and the purified water is discharged through the pipe and the water supply port.

According to an embodiment, the control device may control in the second mode the gas dissolving device and the microbubble generating device such that the raw water contains the gas and the microbubbles. The control device may control in the second mode the second path of the bypass pipe to be the flow path of the branch part, such that the raw water containing the gas and the microbubbles is transmitted to the joint part through the bypass pipe.

According to an embodiment, the water purification device may further include a gas dissolving device that is disposed between the water inlet port and the microbubble generating device and allows gas to be dissolved in the raw water supplied through the water inlet port, and a water quality detector that is disposed between the microbubble generating device and the branch part and configured to detect at least one of pH, conductivity, dissolved oxygen, and temperature of the raw water containing the gas and the microbubbles. The control device may control in the first mode the gas dissolving device and the microbubble generating device so that the raw water does not contain the gas and the microbubbles, and control in the first mode the first path of the filtration filter to be the flow path of the branch part, such that the raw water passes through the filtration filter to generate purified water and the purified water is discharged through the pipe and the water supply port.

According to an embodiment, wherein the control device may control in the second mode the gas dissolving device and the microbubble generating device so that the raw water contains the gas and the microbubbles, detect at least one of pH, conductivity, dissolved oxygen, and temperature of the raw water containing the gas and the microbubbles in the second mode, and control in the second mode the second path of the bypass pipe to be the flow path of the branch part, such that the raw water containing the gas and the microbubbles is transmitted to the join part through the bypass pipe, until the detected value is less than a reference value.

According to an embodiment, the water purification device may further include a second water quality detector that is disposed between the filtration filter and the join part and configured to confirm water quality of purified water by detecting conductivity. The control device may determine a deteriorated state of the filtration filter and whether the filtration filter is necessary to be replaced in conjunction with the second water quality detector in the first mode in which the raw water passes through the filtration filter.

According to an embodiment, the water purification device may further include a heater that is connected to the water inlet port and configured to heat the raw water, a gas dissolving device that is disposed between the heater and the microbubble generating device and allows gas to be dissolved in the raw water heated by the heater, and a water quality detector that is disposed between the microbubble generating device and the branch part and configured to detect at least one of pH, conductivity, dissolved oxygen, and temperature of the heated raw water containing the gas and the microbubbles. The control device may control in the first mode the gas dissolving device and the microbubble generating device such that the heated raw water does not contain the gas and the microbubbles, and control in the first mode the first path of the filtration filter to be the flow path of the branch part, such that the raw water passes through the filtration filter to generate purified water and the purified water is discharged through the pipe and the water supply port.

According to an embodiment, wherein the control device may control in the second mode the gas dissolving device and the microbubble generating device such that the heated raw water contains the gas and the microbubbles, detect at least one of pH, conductivity, dissolved oxygen, and temperature of the heated raw water containing the gas and the microbubbles in the second mode, and gradually increase a temperature of the heater up to a threshold temperature until the detected value is less than a reference value when the detected value is equal to or greater than the reference value. The control device may control in the second mode the second path of the bypass pipe to be the flow path of the branch part, such that the raw water containing the gas and the microbubbles is transmitted to the join part through the bypass pipe, until the detected value is less than the reference value.

According to an embodiment, the control device may maintain a temperature of nanobubble water containing microbubbles sequentially at 25°C, 40°C, 60°C, and 80°C for a certain period of time through the heater, and form the second path of the bypass pipe as the flow path of the branch part in the second mode by controlling the temperature of the nanobubble water to be maintained at 25°C again until the number of microbubbles in the nanobubble water maintains a threshold ratio. The control device may form the second path of the bypass pipe as the flow path of the branch part in the second mode by increasing the temperature of the nanobubble water again when the number of microbubbles in the nanobubble water is less than the threshold ratio.

According to an embodiment, the control device may control the microbubble generating device such that a modal bubble diameter of the microbubbles is one micrometer or less.

According to an embodiment, the control device may control the second path of the bypass pipe to be the flow path of the branch part at a first timing of supplying the microbubbles, such that the nanobubble water containing the microbubbles circulates in the pipe to remove scale inside the pipe. The control device may control the flow path of the branch part to be switched to the first path of the filtration filter at a second timing of stopping the supply of the microbubbles, such that the purified water is discharged through the pipe and the water supply port.

According to an embodiment, the control device may control the microbubble generating device such that a modal bubble diameter of the microbubbles is less than a certain value according to water quality of the raw water detected through a water quality detector, and control the microbubble generating device so that the modal bubble diameter of the microbubbles decreases and an amount of microbubbles increases as the water quality of the raw water deteriorates.

According to an embodiment, the water inlet port may be formed in a first side area of a washing apparatus, and a washing tub area of the washing apparatus may include an inner tub and an outer tub. The washing apparatus may include the microbubble generating device and the water supply port in an upper area of the outer tub in a Z-axis direction. The control device may control the microbubble generating device to remove scale formed between the inner tub and the outer tub and scale formed on a heating element of a heater, by using the microbubbles.

According to the present disclosure, the cause of failure can be ruled out by suppressing scale adhesion, which can extend the product life cycle of a water purification device or washing apparatus.

According to the present disclosure, scale adhesion can be suppressed without the use of a dedicated chemical solution and additional devices, thereby improving the convenience of maintenance of a water purification device or washing apparatus.

According to the present disclosure, a method for suppressing scale adhesion to a pipe without using a chemical solution can be provided, thereby improving sanitation and responding to environmental issues.

According to the present disclosure, additional devices such as pumps are not needed, and the product price of the water purification device or washing apparatus can be reduced.

Further scope of applicability of the present disclosure will become apparent from the foregoing detailed description. It should be understood, however, that the detailed description and specific examples, such as the preferred embodiment of the invention, are given by way of illustration only, since various changes and modifications within the idea and scope of the invention will be apparent to those skilled in the art.

### BRIEF DESCRIPTION OF THE DRAWINGS

FIG. 1 illustrates the configuration of a water purification device capable of suppressing scale adhesion according to the present disclosure.
FIG. 2 is a flowchart among components in the process of purifying raw water through the water purification device of FIG. 1.
FIG. 3 is flowchart illustrating processes performed in the water purification device in FIG. 1.
FIGS. 4 and 5 are flowcharts of operations performed by a control device of the water purification device according to a purified water supply mode and a maintenance mode according to the present disclosure.
FIGS. 6 to 8 illustrate a configuration including at least one of various devices with improved scale adhesion suppression performance according to embodiments.
FIG. 9 is a front view of a washing apparatus including a water supply port and a microbubble generating device.
FIG. 10 illustrates the detailed configuration of the washing apparatus capable of suppressing scale adhesion, illustrated in FIG. 9.
FIG. 11 illustrates a system for measuring bacteria in a pipe according to a flow of water in the pipe using a pump.
FIG. 12 illustrates a system for measuring bacteria in a pipe by adding hard water components to nanobubble water or purified water.
FIG. 13 illustrates the change in the number of microbubbles as time elapses in a state where the temperature of nanobubble water has been adjusted.
FIG. 14 illustrates the change in the number of microbubbles as time elapses at room temperature after maintaining the temperature of nanobubble water at a specific temperature for 30 minutes.
FIG. 15 is a graph showing the changes in the number of microbubbles and conductivity due to concentration of nanobubble water.

### DETAILED DESCRIPTION OF THE EMBODIMENTS

The technology disclosed in the present disclosure is applied to water purification devices and washing apparatuses capable of suppressing scale adhesion. However, the technology disclosed in the present disclosure is not limited to this, and can be applied to all water purification devices and washing apparatuses capable of suppressing scale adhesion to which the technical idea of the technology can be applied.

It is noted that the technical terms used herein are used only to describe specific embodiments and are not intended to limit the invention. Also, unless particularly defined otherwise, technological terms used herein should be construed as a meaning that is generally understood by those having ordinary skill in the art to which the invention pertains, and should not be construed too broadly or too narrowly. Furthermore, if technological terms used herein are wrong terms unable to correctly express the scope of the invention, then they should be replaced by technological terms that are properly understood by those skilled in the art. In addition, general terms used in this invention should be construed based on the definition of dictionary, or the context, and should not be construed too broadly or too narrowly.

Incidentally, unless clearly used otherwise, expressions in the singular number include a plural meaning. In this application, the terms "comprising" and "including" should not be construed to necessarily include all of the elements or steps disclosed herein, and should be construed not to include some of the elements or steps thereof, or should be construed to further include additional elements or steps.

In general, a suffix such as "module" and "unit" may be used to refer to elements or components. Use of such a suffix herein is merely intended to facilitate description of this disclosure, and the suffix itself is not intended to give any special meaning or function.

It will be understood that although the terms first, second, etc. may be used herein to describe various elements, these elements should not be limited by these terms. These terms are generally only used to distinguish one element from another. For example, without departing from the scope of the present disclosure, a first component may be referred to as a second component, and similarly, the second component may also be referred to as the first component.

Description will now be given in detail according to preferred embodiments disclosed herein, with reference to the accompanying drawings. For the sake of brief description with reference to the drawings, the same components may be provided with the same or similar reference numbers, and description thereof will not be repeated.

In describing the present disclosure, if a detailed explanation for a related known function or construction is considered to unnecessarily divert the gist of the present disclosure, such explanation has been omitted but would be understood by those skilled in the art. It should be noted that the attached drawings are provided to facilitate understanding of the embodiments disclosed in this specification, and should not be construed as limiting the technical idea disclosed in this specification by the attached drawings.

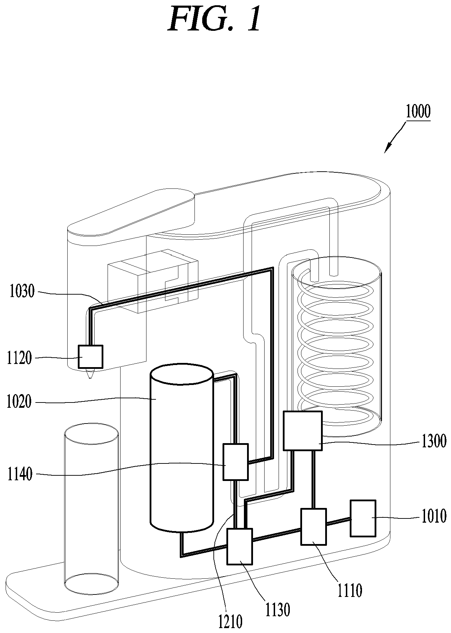

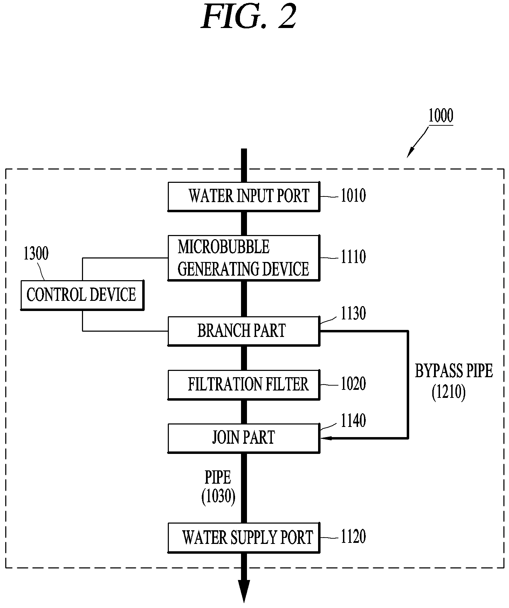

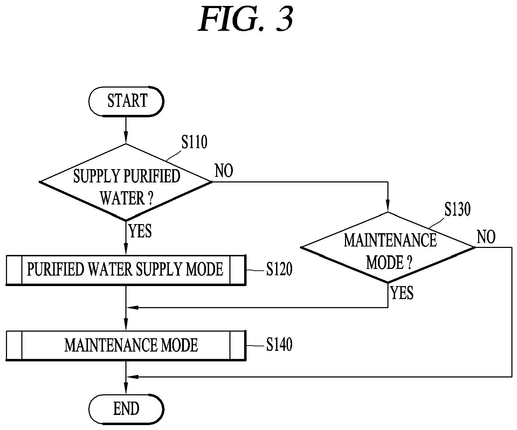

Hereinafter, a water purification device capable of suppressing scale adhesion according to the present disclosure will be described. In this regard, FIG. 1 illustrates the configuration of a water purification device capable of suppressing scale adhesion according to the present disclosure. FIG. 2 is a flowchart among components in the process of purifying raw water through the water purification device of FIG. 1. Meanwhile, FIG. 3 is flowchart illustrating processes performed in the water purification device in FIG. 1.

Hereinafter, a water purification device capable of suppressing scale adhesion according to the present disclosure will be described with reference to FIGS. 1 to 3.

A water purification device 1000 capable of suppressing scale adhesion may be configured to include a pipe 1030, a microbubble generating device 1110, a bypass pipe 1210, and a control device 1300. The water purification device 1000 may be configured to include a plurality of input/output parts that receive, generate, and output raw water and purified water, and components associated with the plurality of input/output parts. In this regard, the water purification device 1000 may be configured to further include a water inlet port 1010, a filtration filter 1020, a water supply port 1120, a branch part 1130, and a join part 1140.

The water inlet port 1010 may be formed in a lower area of a first side of the water purification device 1000 to receive raw water. The filtration filter 1020 may be disposed in an inner area of the water purification device 1000 to purify raw water and produce purified water. The filtration filter 1020 may be connected to the branch part 1130. The filtration filter 1020 may be connected to the join part 1140. The pipe 1030 may be disposed such that raw water and purified water pass therethrough.

The water inlet port 1010 may be formed on the first side of the water purification device 1000, such that raw water is introduced therethrough before generating purified water. The type of raw water is not particularly limited, but tap water is most preferable. The material or shape of the water inlet port 1010 is not limited, but may be selected depending on the type of water purification device 1000 or raw water to be treated.

The filtration filter 1020 is a means of filtering raw water, and a filtration method is not limited, but it is most preferable that the filtration filter 1020 is one selected, for example, from among an activated carbon filter, a resin-based ion exchange filter, a hollow fiber membrane, a mesh-shaped strainer, or the like, depending on a water purification level. The material or shape of the filtration filter 1020 is not limited as well and may be selected depending on the type of water purification device 1000 associated with the water purification level.

The pipe 1030 is formed to transport liquid, such as raw water or purified water, flowing through the water purification device 1000. The material or shape of the pipe 1030 is not particularly limited but may be selected depending on the type of water purification device 1000 or the type of liquid to be treated.

The pipe 1030 may be connected to the water supply port 1120 such that purified water can be discharged through the water supply port 1120. The pipe 1030 may be connected to the join part 1140, and the raw water received through the water inlet port 1010 may pass through the microbubble generating device 1110, the branch part 1130, and the filtration filter 1020, such that purified water can be generated. The purified water generated through the filtration filter 1020 may be discharged into a cup placed on the water purification device 1000 through the join part 1140, the pipe 1030, and the water supply port 1120.

The microbubble generating device 1110 may be disposed between the water inlet port 1010 and the branch part 1130. The microbubble generating device 1110 may be configured to generate microbubbles in the raw water received through the water inlet port 1010. The microbubbles may be formed to remove or suppress scale adhesion to the pipe, but are not limited to this and may change depending on the application. Raw water containing microbubbles may be delivered to the join part 1130 through the branch part 1130 without passing through the filtration filter 1020.

The microbubble generating device 1110 is installed at an arbitrary position between the water inlet port 1010 and the filtration filter 1020 to supply microbubbles containing bubbles of micro size or smaller to the raw water. The method of generating microbubbles is not limited, but nanobubble water may be generated using the pressure of the raw water supplied from the water inlet port 1010 of the water purification device 1000. A type of ejector of absorbing air from an atmosphere may be applied or a cavitation manner of generating microbubbles from dissolved gas in water by drastic contraction/expansion of a pipe may be applicable.

The water supply port 1120 is means for outputting purified water generated by filtration means, and its material or shape is not particularly limited and may be selected depending on a type of product to be mounted or a type of liquid to be treated. The water supply port 1120 may be formed at a lower end of a second side of the water purification device 1000 to output purified water. The lower end of the first side of the water purification device 1000 may be disposed on a bottom surface, and the lower end of the second side may be spaced apart from the bottom surface by a predetermined height. As the lower end of the second side of the water purification device 1000 is spaced apart, a cup may be placed between the lower end of the second side and the bottom surface. The pipe 1030 may be configured to connect the water supply port 1120 and the join part 1140.

The branch part 1130 is installed between the microbubble generating device 1110 and the filtration filter 1020, and switches a flow path to a first path of the filtration filter 1020 or a second path of the bypass pipe 1210. The branch part 1130 is preferably installed immediately before the filtration filter 1020, but is not limited thereto and may change depending on the application. It is possible to automatically or manually switch the flow path through the branch part 1130.

The join part 1140 is installed between the filtration filter 1020 and the water supply port 1120 and is formed to join the first flow path toward the filtration filter 1020 and the second flow path toward the bypass pipe 1210. The join part 1140 is preferably installed to be connected directly to the filtration filter 1020, but is not limited thereto and may change depending on the application.

The bypass pipe 1210 may be formed to connect the branch part 1130 and the join part 1140. One end of the bypass pipe 1210 may be connected to the branch part 1130. The other end of the bypass pipe 1210 may be connected to the join part 1140. The other end of the bypass pipe 1210 may be connected to the join part 1140 to bypass the filtration filter 1020. The material or shape of the bypass pipe 1210 that bypasses the filtration filter 1020 is not limited and may be selected depending on a type of product to be mounted or a type of liquid to be treated.

The control device 1300 may be connected to the microbubble generating device 1110. The control device 1300 may be connected to the microbubble generating device 1110 and configured to control the supply timing of microbubbles. The control device 1300 may be connected to the branch part 1130. The control device 1300 may be connected to the branch part 1130 and be configured to control the flow path of the branch part 1130.

The control device 1300 may perform a control operation according to the supply timing of microbubbles by the microbubble generating device 1110. The control device 1300 may control the second path of the bypass pipe 1210 to be the flow path of the branch part 1130 at a first timing at which microbubbles are supplied. Accordingly, the control device 1300 may control nanobubble water containing the microbubbles to circulate inside the pipe 1030 to remove scale from the inside of the pipe 1030.

The control device 1300 may control the first path of the filtration filter 1020 to be the flow path of the branch part 1130 at a second timing at which the supply of microbubbles is stopped. Accordingly, the control device 1300 can control purified water to be discharged to the outside through the pipe 1030 and the water supply port 1120.

Referring to FIGS. 2 and 3, raw water supplied through the water inlet port 1010 is delivered to the microbubble generating device 1110. Raw water containing microbubbles may be delivered to the branch part 1130 through the microbubble generating device 1110 under the control of the control device 1300. In this regard, a determination for a purified water supply process (S110) may be performed by the control device 1300. The determination for the purified water supply process (S110) may be performed based on whether a cup is placed on the water purification device or whether it corresponds to a specific period of time for which the water purification device is used.

When it is determined that the purified water supply process of outputting purified water through the water supply port 1120 is performed (S110), the control device 1300 may perform a first mode, which is a purified water supply mode (S120). To perform the first mode (S120), which is the purified water supply mode (S120), the control device 1300 may control the flow path of the branch part 1130 so that raw water is filtered through the filtration filter 1020 to generate purified water. When it is determined that the purified water supply process is not performed (S110), the control device 1300 may determine whether a mode is a second mode, which is a maintenance mode for suppressing scale adhesion inside the water purification device (S130).

When it is determined that the mode is the second mode (S130), the control device 1300 may perform the second mode, which is the maintenance mode (S140). The determination for the second mode as the maintenance mode (S130) may be performed based on whether a scale amount in a specific area of the water purification device is a certain level or higher. The determination for the second mode as the maintenance mode (S130) may be performed based on whether a certain period of time has elapsed since the second mode was performed in the water purification device. The determination for the second mode as the maintenance mode (S130) may be performed based on whether a supply amount of raw water or a discharge mount of purified water is a certain level or higher after performing the second mode.

In order to perform the second mode as the maintenance mode (S140), the control device 1300 controls the flow path through the branch part 1130 so that raw water containing microbubbles does not pass through the filtration filter 1020 but joins the join part 1140 through the bypass pipe 1210. When it is determined that the mode is not the second mode as the maintenance mode (S130), the control device 1300 may end the control process. Accordingly, the control device 1300 may re-perform the determination for the purified water supply process (S110). The control device 1300 may re-determine the purified water supply process and perform the first mode as the purified water supply mode or the second mode as the maintenance mode at the timing that the second mode is to be started. When the second mode is started, the control device 1300 may control the microbubble generating device 1110 and the flow path of the branch part 1130.

Accordingly, the control device 1300 may be configured to control a microbubble supply timing to the microbubble generating device 1110 and the flow path of the branch part 1130. The control device 1300 controls the microbubble supply timing to the microbubble generating device 1110 and the flow path of the branch part 1130 according to the purified water supply mode and the maintenance mode.

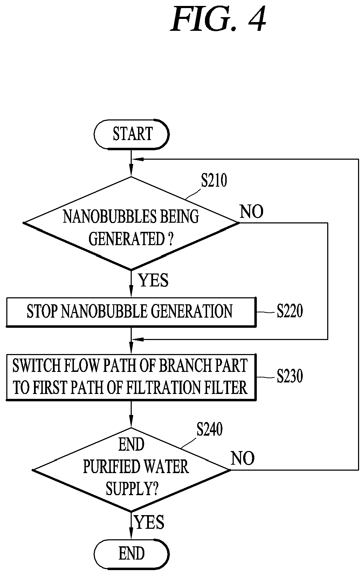

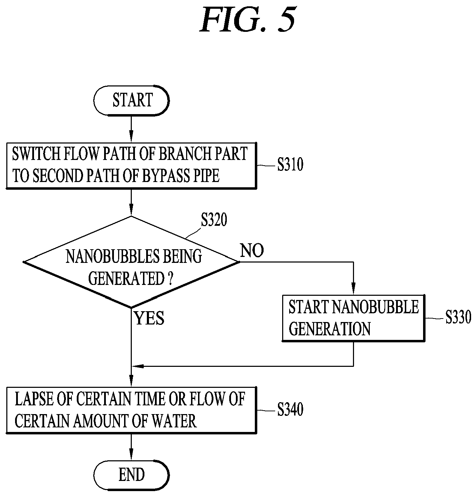

In this regard, FIGS. 4 and 5 are flowcharts of operations performed by the control device of the water purification device according to the purified water supply mode and the maintenance mode according to the present disclosure. FIG. 4 is a flowchart of operations performed by the control device of the water purification device according to the purified water supply mode. FIG. 5 is a flowchart of operations performed by the control device of the water purification device according to the maintenance mode.

Hereinafter, processes that the control device 1300 of the water purification device performs the first mode as the purified water supply mode will be described with reference to FIGS. 1 to 4. The control device 1300 may determine whether microbubbles are being generated through the microbubble generating device 1110 (S210). Microbubbles may be nanobubbles having a unit size of 1 nanometer (um) or less, but are not limited thereto.

When it is determined that microbubbles are being generated, the control device 1300 may control the microbubble generating device 1110 to stop the generation of microbubbles (S220). After the generation of microbubbles is stopped, the control device 1300 may switch the flow path of the branch part 1130 to the first path of the filtration filter 1020 (S230). When it is determined that microbubbles are not being generated, the control device 1300 may immediately switch the flow path of the branch part 1130 to the first path of the filtration filter 1020 (S230) without the process of stopping the generation of microbubbles.

After the flow path of the branch part 1130 is switched to the first path of the filtration filter 1020 (S230), the control device 1300 may determine whether the first mode as the purified water supply mode has been ended (S240). When it is determined that the first mode as the purified water supply mode has not been ended, the control device 1300 may repeat the process of determining whether the microbubbles are being generated through the microbubble generating device 1110 (S210). When it is determined that the first mode as the purified water supply mode has been ended, the control device 1300 may end the first mode of the purified water supply mode and perform the second mode as the maintenance mode.

Hereinafter, processes that the control device 1300 of the water purification device performs the second mode as the maintenance mode will be described with reference to FIGS. 1 to 3 and 5. In this regard, the control device 1300 may perform the second mode as the maintenance mode of FIG. 5 after the first mode as the purified water supply mode of FIG. 4 ends, but is not limited thereto.

The control device 1300 switches the flow path of the branch part 1130 to the second path of the bypass pipe 1210 (S310). The control device 1300 may determine whether microbubbles are being generated through the microbubble generating device 1110 (S320). When it is determined that microbubbles are not generated, the control device 1300 may control the microbubble generating device 1110 to start generating microbubbles (S330).

When it is determined that microbubbles are being generated, the control device 1300 may perform the second mode, which is the maintenance mode, until a predetermined time elapses after the generation of the microbubbles (S340). When it is determined that microbubbles are being generated, the control device 1300 may perform the second mode, which is the maintenance mode, until a certain amount of water flows (S340). In this regard, the control device 1300 may control the microbubble generating device 1110 to generate microbubbles while maintaining the second path of the bypass pipe 1210 as the flow path of the branch part 1130.

When a certain time elapses or a certain amount of water flows after the generation of the microbubbles (S340), the control device 1300 may end the second mode, which is the maintenance mode. After the second mode, which is the maintenance mode, ends, the control device 1300 may start the first mode, which is the purified water supply mode of FIG. 4.

Accordingly, the control device 1300 stops the generation of microbubbles in the purified water supply mode and controls the flow path of the branch part 1130 to be switched to the first path of the filtration filter 1020. After the purified water supply mode ends, the control device 1300 switches the purified water supply mode to the maintenance mode, generates microbubbles, and switches the flow path of the branch part 1130 to the second path of the bypass pipe 1210. This can suppress the microbubbles from flowing into the filtration filter 1020 while suppressing scale adhesion to the pipe using the microbubbles, thereby suppressing bacterial growth in the filtration filter 1020.

The purified water supply mode and the maintenance mode may be switched automatically or manually. After the purified water supply mode ends, the maintenance mode may be automatically performed. The maintenance mode may preferably be activated automatically or regularly, but is not limited thereto, and may change depending on the application. The maintenance mode may end after a certain time elapses or a certain amount of water flows. Therefore, while ensuring the sanitation of the water purification device, scale adhesion is automatically suppressed. This eliminates the need for complicate operations for the user of the water purification device, thereby improving convenience.

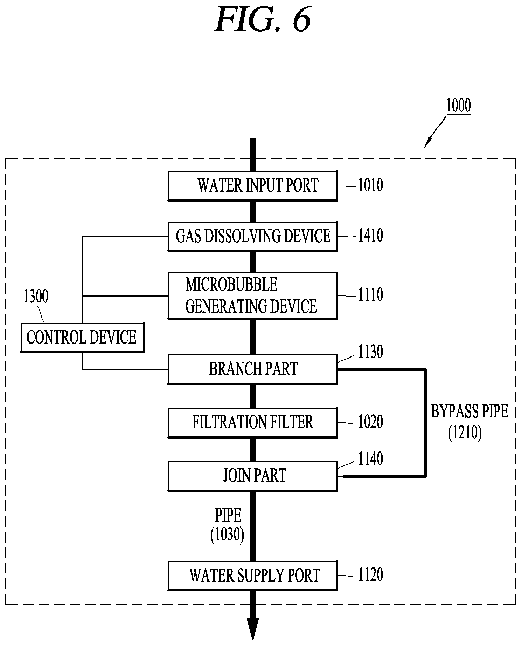

Meanwhile, the water purification device capable of suppressing scale adhesion according to the present disclosure can have improved performance of suppressing the scale adhesion through at least one of various devices. In this regard, FIGS. 6 to 8 illustrate a configuration including at least one of various devices with improved scale adhesion suppression performance according to embodiments.

FIG. 6 illustrates the water purification device 1000 including a gas dissolving device 1410 disposed between the water inlet port 1010 and the microbubble generating device 1110.

Referring to FIGS. 1 to 6, the water purification device 1000 may be configured to further include a gas dissolving device 1410 disposed between the water inlet port 1010 and the microbubble generating device 1110. The gas dissolving device 1410 disposed between the water inlet port 1010 and the microbubble generating device 1110 causes gas to be dissolved in raw water. In this regard, a type or dissolution method of gas dissolved in raw water is not limited and may be arbitrarily selected. In relation to the operation of dissolving gas in raw water, the microbubble generating device 1110 may be implemented in a cavitation manner by generating microbubbles from the gas dissolved in the raw water. Accordingly, an amount of microbubbles generated from the dissolved gas in the raw water through the microbubble generating device 1110 increases.

The control device 1300 may control the gas dissolving device 1410 and the microbubble generating device 1110 in the first mode so that raw water does not contain gas and microbubbles. Thereafter, the control device 1300 may form the first path of the filtration filter 1020 as the flow path of the branch part 1130 in the first mode. The control device 1300 may control the raw water to pass through the filtration filter 1020 to generate purified water and control the purified water to be discharged through the pipe 1030 and the water supply port 1120.

The control device 1300 may control the gas dissolving device 1410 and the microbubble generating device 1110 in the second mode so that raw water contains gas and microbubbles. In the second mode, the control device 1300 may form the second path of the bypass pipe 1210 as the flow path of the branch part 1130, and control the raw water containing the gas and microbubbles to flow to the join part 1140 through the bypass pipe 1210.

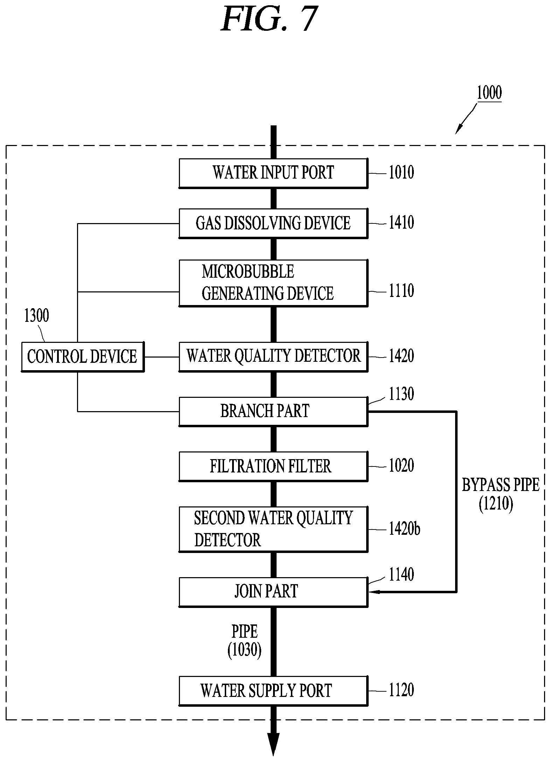

FIG. 7 illustrates the water purification device 1000 including the gas dissolving device 1410 disposed between the water inlet port 1010 and the microbubble generating device 1110, and a water quality detector 1420 disposed between the microbubble generating device 1110 and the branch part 1130. Referring to FIG. 7, the water purification device 1000 may be configured to include the gas dissolving device 1410 or a water quality detector 1420.

Referring to FIGS. 1 to 7, the water purification device 1000 may be configured to further include a gas dissolving device 1410 disposed between the water inlet port 1010 and the microbubble generating device 1110. The water purification device 1000 may be configured to further include a water quality detector 1420 disposed between the microbubble generating device 1110 and the branch part 1130.

The gas dissolving device 1410 disposed between the water inlet port 1010 and the microbubble generating device 1110 causes gas to be dissolved in raw water. In this regard, a type or dissolution method of gas dissolved in raw water is not limited and may be arbitrarily selected. In relation to the operation of dissolving gas in raw water, the microbubble generating device 1110 may be implemented in a cavitation manner by generating microbubbles from the gas dissolved in the raw water. Accordingly, an amount of microbubbles generated from the dissolved gas in the raw water through the microbubble generating device 1110 increases.

The water quality detector 1420 may be configured to detect at least one of pH, conductivity, dissolved oxygen, and temperature. The water quality detector 1420 may be configured to detect at least one of pH, conductivity, dissolved oxygen, and temperature of raw water containing dissolved gas and microbubbles through the gas dissolving device 1410 and the microbubble generating device 1110.

When the water quality detector 1420 is installed immediately after the microbubble generating device 1110, it may calculate an amount of bubbles contained in a liquid by measuring conductivity and dissolved oxygen. The water quality detector 1420 may transmit the detected value to the control device 1300 so that the control device 1300 can control an amount of bubbles to be generated.

Additionally, the control device 1300 may adjust sizes of microbubbles, which are effective in suppressing scale, depending on the water level of raw water. To this end, the control device 1300 may control the microbubble generating device 1110 so that a modal bubble diameter of the microbubbles is 1 micrometer (µm) or less.

In this regard, if nanobubble water of 1 µm or less exists on a metal surface such as a pipe before scale is adhered and deposited, the microbubbles act as obstructions and porous scale is formed. Accordingly, it can be confirmed that the adhesion of scale decreases by the nanobubble water of 1 µm or less on the metal surface of the pipe, etc. and thus a scale area is reduced. In addition, the nanobubble water of 1 µm or less can rotate on the metal surface such as the pipe, etc., thereby suppressing deterioration of sanitation due to propagation of bacteria, which results from that the nanobubble water stays in the filter in an operation-stopped state.

The control device 1300 may control the microbubble generating device 1110 so that the modal bubble diameter of the microbubbles is a specific value or less according to the water level of raw water. The control device 1300 may control the microbubble generating device 1110 such that the modal bubble diameter of the microbubbles is decreased and the amount of microbubbles is increased as the water level of raw water is more lowered. Accordingly, various types of scales can be efficiently removed by use of the microbubbles having various particle sizes, and the scale removal can be performed in a short time by increasing the amount of microbubbles.

When a second water quality detector 1420b is installed at a downstream side rather than the filtration filter 1020, the water quality of purified water can be confirmed from conductivity. Accordingly, the control device 1300 can recognize the deteriorated state of the filtration filter 1020 in conjunction with the second water quality detector 1420b. The control device 1300 can determine whether to replace the filtration filter using the second water quality detector 1420b.

The control device 1300 may control the gas dissolving device 1410 and the microbubble generating device 1110 in the first mode so that raw water does not contain gas and microbubbles. Thereafter, the control device 1300 may form the first path of the filtration filter 1020 as the flow path of the branch part 1130 in the first mode. The control device 1300 may control the raw water to pass through the filtration filter 1020 to generate purified water and control the purified water to be discharged through the pipe 1030 and the water supply port 1120.

The control device 1300 may control the gas dissolving device 1410 and the microbubble generating device 1110 in the second mode so that raw water contains gas and microbubbles. The control device 1300 may detect at least one of pH, conductivity, dissolved oxygen, and temperature of raw water containing gas and microbubbles in the second mode. The control device 1300 may form the second path of the bypass pipe 1210 as the flow path of the branch part 1130 in the second mode until the detected value falls below a reference value. The control device 1300 may control the raw water containing gas and microbubbles to be transmitted to the join part 1140 through the bypass pipe 1210 in the second mode until the detected value falls below the reference value.

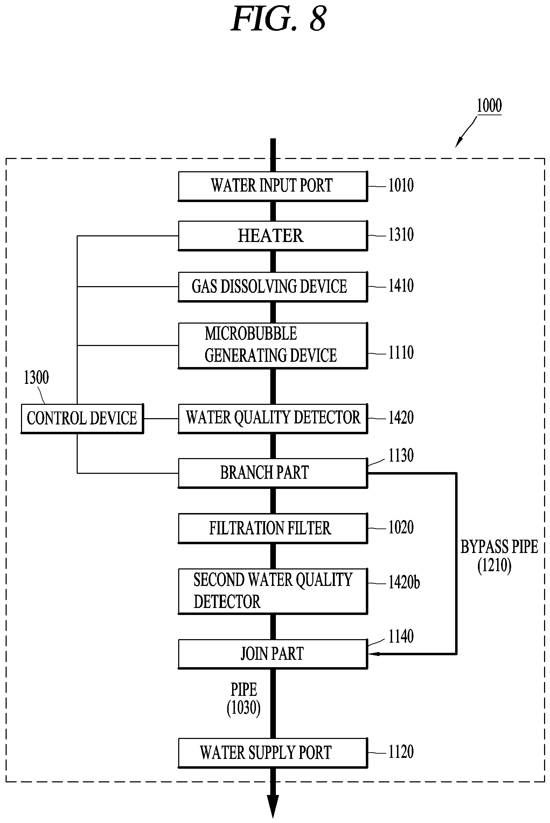

FIG. 8 illustrates the water purification device 1000 including a heater 1310 connected to the water inlet port 1010, the gas dissolving device 1410 disposed between the heater 1310 and the microbubble generating device 1110, and the water quality detector 1420 disposed between the microbubble generating device 1110 and the branch part 1130. Referring to FIG. 8, the water purification device 1000 may be configured to include the heater 1310, the gas dissolving device 1410, and the water quality detector 1420.

Referring to FIGS. 1 to 8, the water purification device 1000 may further include the heater 1310 connected to the water inlet port 1010. The heater 1310 is controlled by the control device 1300 to heat raw water or purified water. The type or installation location of the heater 1310 is not particularly limited. When the heater 1310 is installed immediately after the water inlet port 1010, the heater 1310 can heat the raw water to 60É or higher, so as to decrease bacteria in the raw water, thereby improving sanitation.

The water purification device 1000 may be configured to further include the gas dissolving device 1410 disposed between the heater 1310 and the microbubble generating device 1110. The gas dissolving device 1410 may dissolve gas in the raw water heated by the heater 1310 or purified water.

The water purification device 1000 may be configured to further include the water quality detector 1420 disposed between the microbubble generating device 1110 and the branch part 1130. The water quality detector 1420 may be configured to detect at least one of pH, conductivity, dissolved oxygen, and temperature of heated raw water containing gas and microbubbles.

The gas dissolving device 1410 disposed between the heater 1310 and the microbubble generating device 1110 causes gas to be dissolved in the heated raw water. In this regard, the type or dissolution method of gas to be dissolved in the heated raw water is not limited and may be arbitrarily selected. In relation to the operation of dissolving gas in the heated raw water, the microbubble generating device 1110 may be implemented in a cavitation manner by generating microbubbles from the gas dissolved in the raw water. Accordingly, an amount of microbubbles generated from the dissolved gas in the heated raw water through the microbubble generating device 1110 increases.

The water quality detector 1420 may be configured to detect at least one of pH, conductivity, dissolved oxygen, and temperature. The water quality detector 1420 may be configured to detect at least one of pH, conductivity, dissolved oxygen, and temperature of raw water containing dissolved gas and microbubbles through the gas dissolving device 1410 and the microbubble generating device 1110.

When the water quality detector 1420 is installed immediately after the microbubble generating device 1110, it may calculate an amount of bubbles contained in liquid by measuring conductivity and dissolved oxygen. The water quality detector 1420 may transmit the detected value to the control device 1300 so that the control device 1300 can control an amount of bubbles to be generated.

Additionally, the control device 1300 may adjust microbubbles, which are effective in suppressing scale, depending on the water level of raw water. To this end, the control device 1300 may control the microbubble generating device 1110 so that a modal bubble diameter of the microbubbles is 1 micrometer (µm) or less.

A second water quality detector 1420b may be installed at a downstream side rather than the filtration filter 1020. The second water quality detector 1420b may be disposed between the filtration filter 1020 and the join part 1130. In the first mode, which is the purified water supply mode in which raw water passes through the filtration filter 1020, the second water quality detector 1420b may be configured to check the water level of purified water from the conductivity of raw water or purified water. Accordingly, the control device 1300 can determine the deteriorated state of the filtration filter 1020 in conjunction with the second water quality detector 1420b. The control device 1300 may determine whether to replace the filtration filter 1020 by using the second water quality detector 1420b, and display on a screen a message indicating that the filtration filter 1020 needs to be replaced.

The control device 1300 may control the gas dissolving device 1410 and the microbubble generating device 1110 in the first mode so that the heated raw water does not contain gas and microbubbles. Thereafter, the control device 1300 may form the first path of the filtration filter 1020 as the flow path of the branch part 1130 in the first mode. The control device 1300 may control the heated raw water to pass through the filtration filter 1020 to generate purified water and control the purified water to be discharged through the pipe 1030 and the water supply port 1120.

The control device 1300 may control the gas dissolving device 1410 and the microbubble generating device 1110 in the second mode so that the heated raw water contains gas and microbubbles. The control device 1300 may detect at least one of pH, conductivity, dissolved oxygen, and temperature of heated raw water containing gas and microbubbles in the second mode.

In the second mode, when the detected value is equal to or greater than a threshold value, the control device 1300 may gradually increase the temperature of the heater 1310 up to a threshold temperature until the detected value falls below a reference value. The control device 1300 may form the second path of the bypass pipe 1210 the flow path of the branch part 1130 in the second mode until the detected value falls below the reference value. The control device 1300 may control the heated raw water containing gas and microbubbles to be transmitted to the join part 1140 through the bypass pipe 1210 in the second mode until the detected value falls below the reference value.

Meanwhile, the control device 1300 may gradually maintain the temperature of nanobubble water containing microbubbles at 25°C, 40°C, 60°C, and 80°C for a certain period of time through the heater 1310. The control device 1300 may control the temperature of nanobubble water to be maintained at 25°C again until the number of microbubbles in the nanobubble water maintains a threshold ratio, and in the second mode, may form the second path of the bypass pipe 1210 the flow path of the branch part 1130. In this regard, the threshold ratio may be determined as a ratio of 85% with respect to the number of microbubbles in a state where the temperature of the nanobubble water is 80°C, but is not limited to this and may change depending on the application.

Additionally, the control device 1300 may increase the temperature of the nanobubble water again when the number of microbubbles in the nanobubble water is less than the threshold ratio. With the temperature of the nanobubble water increased again, the control device 1300 may form the second path of the bypass pipe 1210 the flow path of the branch part 1130 in the second mode. Accordingly, in electronic devices equipped with the water purification device 1000, such as a water purifier or a washing machine, a hot water mode may be actuated through the heater to maintain the number of microbubbles above a certain level or higher, thereby effectively removing scale within the pipe or on the heater.

Referring to FIGS. 1 to 8, the control device 1300 may control the microbubble generating device 1110 so that the modal bubble diameter of the microbubbles is 1 micrometer or less. Accordingly, the control device 1300 may control the microbubble generating device 1110 so that the modal bubble diameter of the microbubbles is a specific value or less according to the water level and temperature of the heated raw water. The control device 1300 may control the microbubble generating device 1110 to more decrease the modal bubble diameter of the microbubbles and thus increase the amount of microbubbles when the water level of the heated raw water is more lowered. Accordingly, various types of scale can be efficiently removed by use of the microbubbles having various particle sizes, and the scale removal can be performed in a short time by increasing the amount of microbubbles through the increase in temperature.

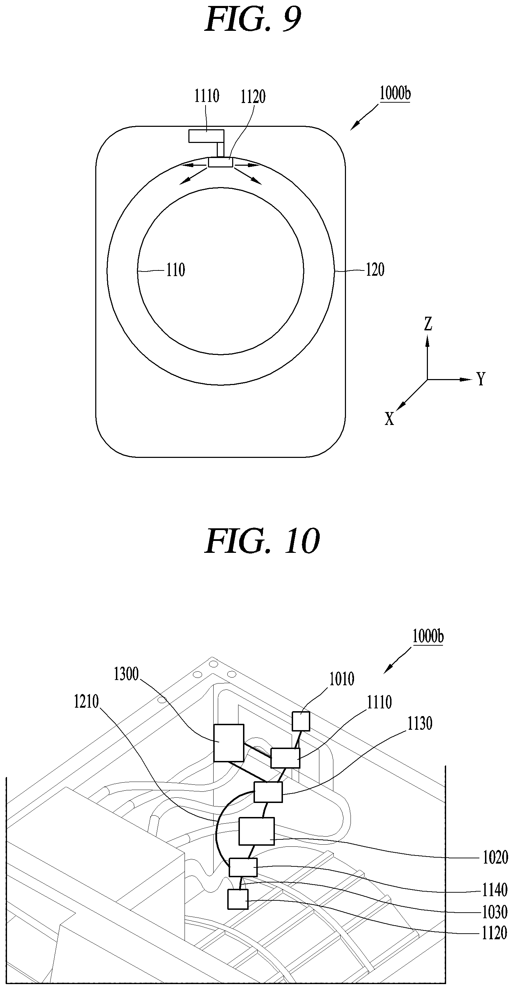

Meanwhile, the water purification device capable of suppressing scale adhesion according to the present disclosure may be applied to a washing apparatus. In this regard, FIG. 9 is a front view of a washing apparatus including a water supply port and a microbubble generating device. FIG. 10 illustrates the detailed configuration of the washing apparatus capable of suppressing scale adhesion, illustrated in FIG. 9.

Referring to FIG. 9, the washing tub area of the washing apparatus 1000b equipped with a water purification device may be configured to include an inner tub 110 and an outer tub 120. The washing apparatus 1000b equipped with the water purification device may be configured to include the microbubble generating device 1110 and the water supply port 1120 in an upper area of the outer tub 120 in the washing tub area in the Z-axis direction. Scale may be generated and adhered between the inner tub 110 and the outer tub 120 in the washing tub area of the washing apparatus 1000b. Additionally, scale may be generated and adhered on a heating element (heater) inside the washing apparatus 1000b.

Hereinafter, the washing apparatus 1000b including the water purification device capable of suppressing scale adhesion according to the present disclosure will be described, with reference to FIGS. 9 and 10. Meanwhile, all configurations and operations of the water purification device 1000 capable of suppressing scale adhesion, illustrated in FIGS. 1 to 8, may be applied to the washing apparatus 1000b equipped with the water purification device capable of suppressing scale adhesion illustrated in FIGS. 9 and 10.

The washing apparatus 1000b, which includes the water purification device capable of suppressing scale adhesion, may be configured to include a water inlet port 1010, a microbubble generating device 1110, a filtration filter 1020, and a water supply port 1120. The washing apparatus 1000b, which includes the water purification device capable of suppressing scale adhesion, may be configured to further include a branch part 1130, a join part 1140, a bypass pipe 1210, and a control device 1300.

The water inlet port 1010 may be formed in a first side area of the washing apparatus 1000b to receive raw water. The filtration filter 1020 may be disposed in an internal area of the washing apparatus 1000b to purify raw water and produce purified water. The filtration filter 1020 may be connected to the branch part 1130. The filtration filter 1020 may be connected to the join part 1140.

The water inlet port 1010 may be formed on the first side of the washing apparatus 1000b, such that raw water is introduced therethrough before generating purified water. The type of raw water is not particularly limited, but tap water is most preferable. The material or shape of the water inlet port 1010 is not limited, but may be selected depending on the type of washing apparatus 1000b or raw water to be treated.

The filtration filter 1020 is means of filtering raw water, and a filtration method is not limited, but it is most preferable that the filtration filter 1020 is one, selected, for example, from among an activated carbon filter, a resin-based ion exchange filter, a hollow fiber membrane, a mesh-shaped strainer, or the like, depending on a water purification level. The material or shape of the filtration filter 1020 is not limited as well and may be selected depending on the type of washing apparatus 1000b associated with the water purification level.

The pipe 1030 is formed to transport liquid, such as raw water or purified water, flowing through the water purification device 1000. The material or shape of the pipe 1030 is not particularly limited and may be selected depending on the type of washing apparatus 1000b or the type of liquid to be treated.

The pipe 1030 may be connected to the water supply port 1120 such that purified water can be discharged through the water supply port 1120. The pipe 1030 may be connected to the join part 1140, and the raw water received through the water inlet port 1010 may pass through the microbubble generating device 1110, the branch part 1130, and the filtration filter 1020, such that purified water can be generated. The purified water generated through the filtration filter 1020 may be discharged into the washing apparatus 1000b through the join part 1140, the pipe 1030, and the water supply port 1120.

The microbubble generating device 1110 may be disposed between the water inlet port 1010 and the branch part 1130. The microbubble generating device 1110 may be configured to generate microbubbles in the raw water received through the water inlet port 1010. The microbubbles may be formed to remove or suppress scale adhesion to the pipe, but are not limited thereto and may change depending on the application. The raw water containing the microbubbles may be delivered to the join part 1140 through the branch part 1130 without passing through the filtration filter 1020.

The microbubble generating device 1110 is installed at an arbitrary position between the water inlet port 1010 and the filtration filter 1020 to supply microbubbles containing bubbles of micro size or smaller to raw water. The method for generating microbubbles is not limited, but nanobubble water may be generated using pressure of raw water supplied through the water inlet port 1010 of the washing apparatus 1000b. A type of ejector of absorbing air from the atmosphere may be applied or a cavitation manner of generating microbubbles from dissolved gas in water by drastic contraction/expansion of a pipe may be applicable.

The water supply port 1120 is means for outputting purified water generated by filtration means, and its material or shape is not particularly limited and may be selected depending on a type of product to be mounted or a type of liquid to be treated. The water supply port 1120 may be formed between the inner tub 110 and the outer tub 120 of the washing apparatus 1000b. The water supply port 1120 may be formed between the inner tub 110 and the outer tub 120 to be adjacent to the outer tub 120 of the washing apparatus 1000b.

The branch part 1130 is installed between the microbubble generating device 1110 and the filtration filter 1020, and switches the flow path to the first path of the filtration filter 1020 or the second path of the bypass pipe 1210. The branch part 1130 is preferably installed immediately before the filtration filter 1020, but is not limited thereto and may change depending on the application. It is possible to automatically or manually switch the flow path through the branch part 1130.

The join part 1140 is installed between the filtration filter 1020 and the water supply port 1120 and is formed to join the first flow path toward the filtration filter 1020 and the second flow path toward the bypass pipe 1210. The join part 1140 is preferably installed to be connected directly to the filtration filter 1020, but is not limited thereto, and may change depending on the application.

The bypass pipe 1210 may be formed to connect the branch part 1130 and the join part 1140. One end of the bypass pipe 1210 may be connected to the branch part 1130. The other end of the bypass pipe 1210 may be connected to the join part 1140. The other end of the bypass pipe 1210 may be connected to the join part 1140 to bypass the filtration filter 1020. The material or shape of the bypass pipe 1210 that bypasses the filtration filter 1020 is not limited and may be selected depending on a type of product to be mounted or a type of liquid to be treated.

The control device 1300 may be connected to the microbubble generating device 1110. The control device 1300 may be connected to the microbubble generating device 1110 and configured to control the supply timing of microbubbles. The control device 1300 may be connected to the branch part 1130. The control device 1300 may be connected to the branch part 1130 and configured to control the flow path of the branch part 1130. The control device 1300 may control the microbubble generating device 1110 to remove scale generated between the inner tub 110 and the outer tub 120 and scale generated on the heating element of the heater, by using the microbubbles of the microbubble generating device 1110.

The control device 1300 may perform a control operation according to the supply timing of microbubbles by the microbubble generating device 1110. The control device 1300 may control the second path of the bypass pipe 1210 to be the flow path of the branch part 1130 at a first timing at which microbubbles are supplied. Accordingly, the control device 1300 may control nanobubble water containing the microbubbles to circulate inside the pipe 1030 to remove scale from the inside of the pipe 1030.

The control device 1300 may control the first path of the filtration filter 1020 to be the flow path of the branch part 1130 at a second timing at which the supply of the microbubbles is stopped. Accordingly, the control device 1300 can control purified water to be discharged into the washing tub of the washing apparatus 1000b through the pipe 1030 and the water supply port 1120.

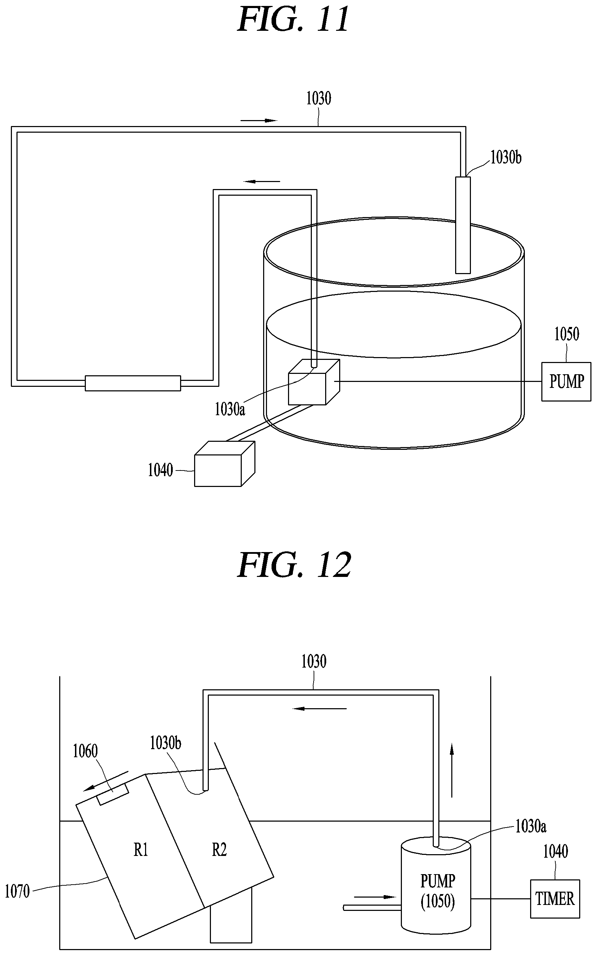

Meanwhile, the water purification device or washing apparatus capable of suppressing scale adhesion according to the present disclosure can suppress the propagation of bacteria on the inner surface of the pipe by nanobubble water which is generated by the gas dissolving device and the microbubble generating device. In this regard, FIG. 11 illustrates a system for measuring bacteria in a pipe according to a flow of water in the pipe using a pump.

Referring to FIG. 11, the adhesion of bacteria due to scale in the pipe 1030 may be confirmed by adding myxobacteria to pure water, and controlling the pure water to flow for 16 minutes and not to flow for one hour, which is repeated for 3 days. Meanwhile, the adhesion of bacteria due to scale in the pipe 1030 may be confirmed by adding myxobacteria to nanobubble water, and controlling the nanobubble water to flow for 16 minutes and not to flow for 1 hour, which is repeated for 3 days.

Referring to FIG. 11, the pure water or nanobubble water may be controlled by a timer 1040 to flow within the pipe 1030 for a certain period of time (e.g., 16 minutes). The pipe 1030 may have an inner diameter of 6 mm and a length of 50 mm, but is not limited thereto, and may change depending on the application. The adhesion of bacteria due to scale in the pipe 1030 may be confirmed using adenosine triphosphate (ATP).

The pump 1050 may be connected to an inlet 1030a of the pipe 1030, and thus intermittent control can be performed so that pure water or nanobubble water flows or does not flow within the pipe 1030. The pure water or nanobubble water flowing within the pipe 1030 may be discharged through an outlet 1030b of the pipe 1030. In this regard, Table 1 compares bacteria-adhered states in an inlet area and an outlet area of the pipe of the pure water and nanobubble water according to ATP values.

**[Table 1]**

| | Inlet area of pipe | Outlet area of pipe |
|---|---|---|
| Pure water | 185 | 1262 |
| Nanobubble water | 2764 | 18722 |

Referring to Table 1, the ATP value generated by the nanobubble water is greater than that of the pure water. The reason why the ATP value in the pipe 1030 through which the nanobubble water circulates is greater is that bacteria are prone to propagation by air when the nanobubble water circulates. The ATP value of the pipe 1030 when the pure water or nanobubble water flows in the pipe 1030 is greater than that when the pure water or nanobubble water does not flow in the pipe 1030. Therefore, if air remains in the pipe 1030, bacteria easily propagate in the pipe 1030. In this regard, FIG. 12 illustrates a system for measuring bacteria in the pipe by adding hard water components to the nanobubble water or pure water. Referring to FIG. 12, the nanobubble water or pure water to which hard water components are added may circulate within the pipe 1030, causing scale to be adhered on a substrate 1060. NaHCO₃, MgSO₄, CaCl₂ or NaHSO₄ components may be added as hard water components. The NaHCO₃ component may be added within a certain range based on 2.0 mmol/L. The MgSO₄ component may be added within a certain range based on 0.38 mmol/L. The CaCl₂ component may be added within a certain range based on 1.11 mmol/L. The NaHSO₄ component may be added within a certain range based on 0.35 mmol/L.

The nanobubble water containing the hard water components may be disposed in a first region R1 of the water tub 1070. Water containing hard water components may be disposed in a second region R2 of the water tub 1070. The substrate 1060 may be disposed in the first region R1 of the water tub 1070, so that scale adhered on the substrate 1060 can be removed by the nanobubble water containing the hard water components.

By adding hard water components to pure water and controlling the pure water containing the hard water components to flow for one hour and not to flow for one hour, which is repeated for several days, the adhesion of bacteria due to the scale in the pipe 1030 can be confirmed. On the other hand, by adding hard water components to nanobubble water and controlling the nanobubble water containing the hard water components to flow for one hour and not to flow for one hour, which is repeated for several days, the adhesion of bacteria due to the scale in the pipe 1030 can be confirmed.

Referring to FIG. 12, the pure water or nanobubble water may be controlled by a timer 1040 to flow within the pipe 1030 for a certain period of time (e.g., one hour). The adhesion of bacteria due to scale in the pipe 1030 may be confirmed using ATP.

The pump 1050 may be connected to the inlet 1030a of the pipe 1030, and thus intermittent control can be performed so that the pure water or nanobubble water flows or does not flow within the pipe 1030. Scale is more easily adhered on places where water droplets remain when the pure water or nanobubble water does not flow than when the pure water or nanobubble water flows. The pure water or nanobubble water flowing in the pipe 1030 may be discharged through the outlet 1030b of the pipe 1030, causing scale to be adhered on the substrate 1060.

Scale may be generated on the substrate 1060 in the pure water or nanobubble water after several days (e.g., 7.83 days). Areas of scale generated on the substrate 1060 in the pure water and the nanobubble water after several days (e.g., 12.75 days) may be 5.8 cm² and 3.0 cm², respectively. The area of the scale generated by the nanobubble water may be reduced by about 48% compared to the area of the scale generated by the pure water, so scale generation and adhesion can be suppressed by the nanobubble water.

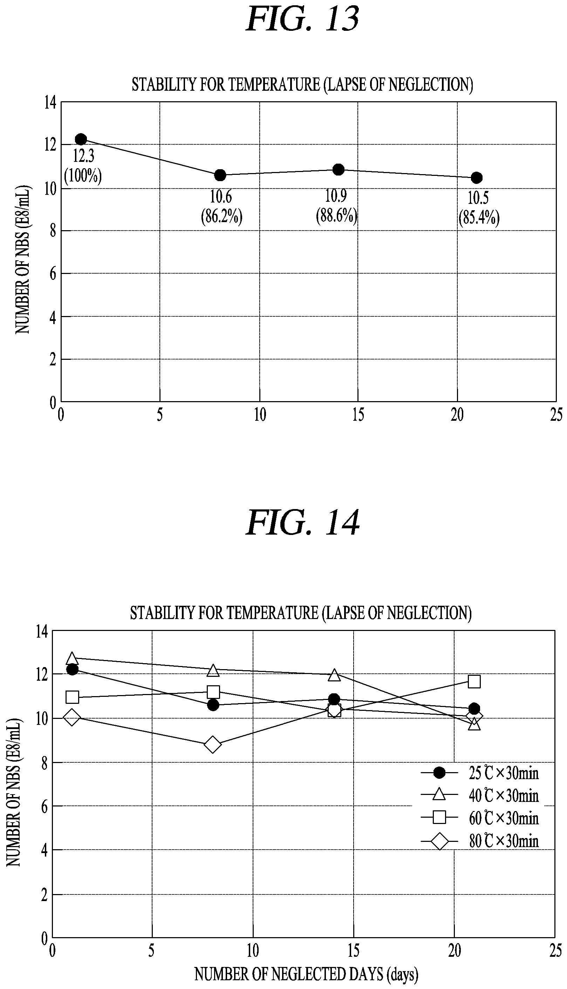

Meanwhile, in the water purification device or washing apparatus capable of suppressing scale adhesion according to the present disclosure, the number of microbubbles can be adjusted by adjusting the temperature of the nanobubble water. In this regard, FIG. 13 illustrates the change in the number of microbubbles as time elapses in a state where the temperature of nanobubble water has been adjusted.

Referring to FIGS. 1 to 11 and 13, the nanobubble water generated using pure water may be maintained at a preset water temperature (25°C, 40°C, 60°C, 80°C) for 30 minutes, and then left at room temperature (25°C). The number of microbubbles can be measured using Nanosight NS300. After three weeks, the maintenance rate of the number of microbubbles is 85.4%. Therefore, it can be confirmed that the microbubbles stably exist without coalescence, levitation, or collapse of the microbubbles.

FIG. 14 illustrates the change in the number of microbubbles as time elapses at room temperature after maintaining the temperature of nanobubble water at a specific temperature for 30 minutes. Referring to FIGS. 1 to 11 and 14, it can be confirmed that the stability is maintained even at room temperature after heating the nanobubble water. On the other hand, when the nanobubble water is frozen and then thawed, the microbubbles may disappear.

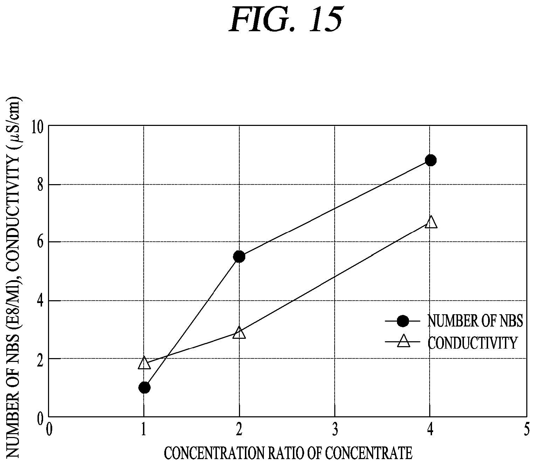

FIG. 15 is a graph showing the changes in the number of microbubbles and conductivity due to concentration of nanobubble water. Referring to FIGS. 1 to 11 and 15, the number of microbubbles, dissolved oxygen, and conductivity of nanobubble water generated using purified water can be measured. On the other hand, the number of microbubbles, dissolved oxygen, and conductivity of the nanobubble water can be measured when the temperature of the nanobubble water is increased to 80°C to concentrate the nanobubble water by moisture evaporation and then is maintained at room temperature (25°C).

In this regard, as the number of microbubbles increases by the concentration, the conductivity of the nanobubble water increases. It is possible to estimate changes in the number of microbubbles based on the effectiveness of concentration and conductivity of the nanobubble water. Therefore, the number of microbubbles can increase by raising the temperature of the nanobubble water to concentrate the nanobubble water in the water purification device 1000 or the washing apparatus 1000b. Accordingly, scale that is generated and adhered in a specific area of the water purification device 1000 or the washing apparatus 1000b, that is, in a pipe or heater area, can be effectively removed by raising the temperature of the nanobubble water so that the nanobubble water is concentrated.

So far, the water purification device or washing apparatus capable of suppressing scale adhesion according to the present disclosure have been described. Hereinafter, technical effects of the water purification device or washing apparatus capable of suppressing the scale adhesion according to the present disclosure will be described.

According to the present disclosure, the cause of failure can be ruled out by suppressing scale adhesion, which can extend the product life cycle of a water purification device or washing apparatus.

According to the present disclosure, scale adhesion can be suppressed without the use of a dedicated chemical solution and additional devices, thereby improving the convenience of maintenance of a water purification device or washing apparatus.

According to the present disclosure, a method for suppressing scale adhesion to a pipe without using a chemical solution can be provided, thereby improving sanitation and responding to environmental issues.

According to the present disclosure, additional devices such as pumps are not needed, and the product price of the water purification device or washing apparatus can be reduced.

The above detailed description should not be limitedly construed in all aspects and should be considered as illustrative. The scope of the present disclosure should be determined by rational interpretation of the appended claims, and all changes within the scope of the present disclosure are included in the scope of the present disclosure.

## Claims

1. A water purification device (1000) for suppressing scale adhesion, the water purification device (1000) comprising:
a water inlet port (1010) through which raw water flows in, a filtration filter (1020) configured to purify the raw water to generate purified water, and a pipe (1030) through which the raw water and the purified water flow;
a microbubble generating device (1110) configured to generate microbubbles, a water supply port (1120) through which the purified water flows out, a branch part (1130) arranged to branch off the pipe (1030), and a join part (1140) where the pipe (1030) joins, the pipe (1030) connecting the water supply port (1120) and the join part (1140);
a bypass pipe (1210) that has one end connected to the branch part (1130) and another end connected to the join part (1140) to bypass the filtration filter (1020); and
a control device (1300) configured to control a supply timing of the microbubbles and a flow path of the branch part (1130).

2. The water purification device (1000) of claim 1, wherein the control device (1300) is configured to
perform a first mode as a purified water supply mode when it is determined that a purified water supply process of supplying the purified water through the water supply port (1120) is performed,
determine whether a mode is a second mode as a maintenance mode for suppressing scale adhesion in the water purification device (1000) when it is determined that the purified water supply process is not performed, and
control the flow path of the branch part (1130) such that raw water comprising microbubbles joins the join part (1140) through the bypass pipe (1210) when it is determined that the mode is the second mode,
and preferably control the supply timing of the microbubbles to the microbubble generating device (1110) and the flow path of the branch part (1130) when it is determined that the mode is the second mode, and
perform the first mode by redetermining the purified water supply process or control the microbubble generating device (1110) and the flow path of the branch part (1130) at a time point that the second mode is started, when it is determined that the mode is not the second mode.

3. The water purification device (1000) of claim 2, wherein the control device (1300), in the first mode, is configured to
determine whether the microbubbles are being generated through the microbubble generating device (1110),
control the microbubble generating device (1110) to stop generating the microbubbles when it is determined that the microbubbles are being generated, and
switch the flow path of the branch part (1130) to a first path of the filtration filter (1020) after the generation of the microbubbles is stopped,
and preferably
wherein the control device (1300), in the first mode, is configured to
determine whether the first mode has ended after the flow path of the branch part (1130) is switched to the first path,
repeatedly perform the process of determining whether the microbubbles are being generated by the microbubble generating device (1110) when it is determined that the first mode has not ended, and
perform the second mode as the maintenance mode when it is determined that the first mode has ended.

4. The water purification device (1000) of claim 2 or 3, wherein the control device (1300), in the second mode, is configured to
switch the flow path of the branch part (1130) to a second path of the bypass pipe (1210),
determine whether the microbubbles are being generated through the microbubble generating device (1110),
control the microbubble generating device (1110) to start the generation of the microbubbles when it is determined that the microbubbles are not being generated.

5. The water purification device (1000) of any one of claim 2 to 4, wherein the control device (1300), in the second mode, is configured to
control the microbubble generating device (1110) to generate the microbubbles while maintaining the flow path of the bypass pipe (1210) as the flow path of the branch part (1130),
perform the second mode as the maintenance mode until a certain period of time elapses or a certain amount of water flows after the microbubbles are generated when it is determined that the microbubbles are being generated,
end the second mode as the maintenance mode when the certain period of time has elapsed or the certain amount of water flows after the generation of the microbubbles, and
start the first mode as the purified water supply mode after the second mode ends.

6. The water purification device (1000) of any one of claims 2 to 5, further comprising a gas dissolving device (1410) that is disposed between the water inlet port and the microbubble generating device (1110), and configured to allow gas to be dissolved in the raw water supplied through the water inlet port, and
wherein the control device (1300) is configured to control, in the first mode, the gas dissolving device (1410) and the microbubble generating device (1110), such that the raw water does not contain the gas and the microbubbles,
to control, in the first mode, the first path of the filtration filter (1020) to be the flow path of the branch part (1130), such that the raw water passes through the filtration filter (1020) to generate purified water and the purified water is discharged through the pipe (1030) and the water supply port (1120),
and preferably wherein the control device (1300) is configured to control, in the second mode, the gas dissolving device (1410) and the microbubble generating device (1110) such that the raw water contains the gas and the microbubbles, and
to control, in the second mode, the second path of the bypass pipe (1210) to be the flow path of the branch part (1130), such that the raw water comprising the gas and the microbubbles is transmitted to the join part (1140) through the bypass pipe (1210).

7. The water purification device (1000) of any one of claims 2 to 5, further comprising:
a gas dissolving device (1410) that is disposed between the water inlet port and the microbubble generating device (1110) and to allow gas to be dissolved in the raw water supplied through the water inlet port; and
a water quality detector (1420) that is disposed between the microbubble generating device (1110) and the branch part (1130) and configured to detect at least one of pH, conductivity, dissolved oxygen, and temperature of the raw water comprising the gas and the microbubbles,
wherein the control device (1300) is configured to control, in the first mode, the gas dissolving device (1410) and the microbubble generating device (1110) such that the raw water does not contain the gas and the microbubbles, and
to control, in the first mode, the first path of the filtration filter (1020) to be the flow path of the branch part (1130), such that the raw water passes through the filtration filter (1020) to generate purified water and the purified water is discharged through the pipe (1030) and the water supply port (1120).

8. The water purification device (1000) of claim 7, wherein the control device (1300) is configured to control, in the second mode, the gas dissolving device (1410) and the microbubble generating device (1110) such that the raw water contains the gas and the microbubbles, and
to detect at least one of pH, conductivity, dissolved oxygen, and temperature of the raw water comprising the gas and the microbubbles in the second mode, and
to control, in the second mode, the second path of the bypass pipe (1210) to be the flow path of the branch part (1130), such that the raw water comprising the gas and the microbubbles is transmitted to the join part (1140) through the bypass pipe (1210), until the detected value is less than a reference value.

9. The water purification device (1000) of claim 7 or 8, further comprising a second water quality detector (1420b) that is disposed between the filtration filter (1020) and the join part (1140) and configured to confirm water quality of purified water by detecting conductivity, and
wherein the control device (1300) is configured to determine a deteriorated state of the filtration filter (1020) and whether the filtration filter (1020) is necessary to be replaced in conjunction with the second water quality detector (1420b) in the first mode in which the raw water passes through the filtration filter (1020).

10. The water purification device (1000) of any one of claims 2 to 5, further comprising:
a heater (1310) that is connected to the water inlet port (1010) and configured to heat the raw water;
a gas dissolving device (1410) that is disposed between the heater (1310) and the microbubble generating device (1110) and to allow gas to be dissolved in the raw water heated by the heater (1310); and
a water quality detector (1420) that is disposed between the microbubble generating device (1110) and the branch part (1130) and configured to detect at least one of pH, conductivity, dissolved oxygen, and temperature of the heated raw water comprising the gas and the microbubbles,
and preferably wherein the control device (1300) is configured to control, in the first mode, the gas dissolving device (1410) and the microbubble generating device (1110) such that the heated raw water does not contain the gas and the microbubbles, and
to control, in the first mode, the first path of the filtration filter (1020) to be the flow path of the branch part (1130), such that the raw water passes through the filtration filter (1020) to generate purified water and the purified water is discharged through the pipe (1030) and the water supply port (1120).

11. The water purification device (1000) of claim 10, wherein the control device (1300) is configured to control, in the second mode, the gas dissolving device (1410) and the microbubble generating device (1110) such that the heated raw water contains the gas and the microbubbles,
to detect at least one of pH, conductivity, dissolved oxygen, and temperature of the heated raw water comprising the gas and the microbubbles in the second mode, and
to gradually increase a temperature of the heater (1310) up to a threshold temperature until the detected value is less than a reference value when the detected value is equal to or greater than the reference value, and
to control, in the second mode, the second path of the bypass pipe (1210) to be the flow path of the branch part (1130), such that the raw water comprising the gas and the microbubbles is transmitted to the join part (1140) through the bypass pipe (1210), until the detected value is less than the reference value.

12. The water purification device (1000) of claim 10 or 11, wherein the control device (1300) is configured to maintain a temperature of nanobubble water comprising microbubbles sequentially at 25°C, 40°C, 60°C, and 80°C for a certain period of time through the heater (1310),
to form the second path of the bypass pipe (1210) as the flow path of the branch part (1130) in the second mode by controlling the temperature of the nanobubble water to be maintained at 25°C again until the number of microbubbles in the nanobubble water maintains a threshold ratio, and
to form the second path of the bypass pipe (1210) as the flow path of the branch part (1130) in the second mode by increasing the temperature of the nanobubble water again when the number of microbubbles in the nanobubble water is less than the threshold ratio.

13. The water purification device (1000) of any one of claims 2 to 12, wherein the control device (1300) is configured to control the second path of the bypass pipe (1210) to be the flow path of the branch part (1130) at a first timing of supplying the microbubbles, such that the nanobubble water comprising the microbubbles circulates in the pipe (1030) to remove scale inside the pipe (1030), and
to control the flow path of the branch part (1130) to be switched to the first path of the filtration filter (1020) at a second timing of stopping the supply of the microbubbles, such that the purified water is discharged through the pipe (1030) and the water supply port (1120).

14. The water purification device (1000) of any one of claims 7 to 13, wherein the control device (1300) is configured to control the microbubble generating device (1110) such that a modal bubble diameter of the microbubbles is less than a certain value according to water quality of the raw water detected through the water quality detector (1420), and
to control the microbubble generating device (1110) such that the modal bubble diameter of the microbubbles decreases and an amount of microbubbles increases as the water quality of the raw water deteriorates.

15. The water purification device of any one of claims 1 to 14, wherein the water inlet port (1010) is formed in a first side area of a washing apparatus (1000b), and a washing tub area of the washing apparatus (1000b) comprises an inner tub (110) and an outer tub (120),
wherein the washing apparatus (1000b) comprises the microbubble generating device (1110) and the water supply port (1120) in an upper area of the outer tub (120) in a Z-axis direction, and
the control device (1300) is configured to control the microbubble generating device (1110) to remove scale formed between the inner tub (110) and the outer tub (120) and scale formed on a heating element of a heater, by using the microbubbles,
and/or
wherein the control device (1300) is configured to control the microbubble generating device (1110) such that a modal bubble diameter of the microbubbles is one micrometer or less.
